# EUROPEAN PATENT SPECIFICATION

(11) **EP 3 181 610 B1**
(45) Date of publication and mention of the grant of the patent: **29.04.2020**
(21) Application number: 15865646.2
(22) Date of filing: 04.12.2015
(51) Int. Cl.: C08L 69/00, C08L 83/04, C08L 83/10, C08G 64/18, C09K 21/14, C08K 5/3475, C08G 77/20, C08G 77/448

(54) **POLYCARBONATE-BASED RESIN COMPOSITION**
POLYCARBONATBASIERTE HARZZUSAMMENSETZUNG
COMPOSITION DE RÉSINE À BASE DE POLYCARBONATE

(30) Priority: 04.12.2014 KR 20140173005
(43) Date of publication of application: 21.06.2017
(73) Proprietor: LG Chem, Ltd., Seoul 07336 (KR)
(72) Inventor: SON, Young Wook, Daejeon 34122 (KR); HONG, Moo Ho, Daejeon 34122 (KR); LEE, Ki Jae, Daejeon 34122 (KR); PARK, Jung Jun, Daejeon 34122 (KR)
(74) Representative: Goddar, Heinz J.
(86) International application number: PCT/KR2015/013244
(87) International publication number: WO 2016/089169

(56) References cited:
- EP-A1- 2 937 373
- WO-A2-2013/175445
- JP-B2- 3 457 805
- KR-A- 20130 079 621
- KR-A- 20140 027 199
- KR-A- 20140 084 858
- US-A1- 2010 168 370
- US-A1- 2011 060 089
- US-A1- 2014 206 802
- US-A1- 2014 357 769

## Description

### [Technical Field]

The present invention relates to a polycarbonate based resin composition and molded articles thereof, and more particularly, to a polycarbonate based resin composition of which impact strength, flowability (fluidity), and the like, are improved, and molded articles thereof.

### [Background Art]

US 2014/357769 A discloses thermal plastic blends comprising polycarbonate polymer, polyester polymer and reinforcing filler.

Polycarbonate resins are prepared by condensation-polymerization of an aromatic diol such as bisphenol A with a carbonate precursor such as a phosgene and have excellent impact strength, dimensional stability, heat resistance, transparency, and the like. Thus, the polycarbonate resins have application in a wide range of uses, such as exterior materials of electrical and electronic products, automobile parts, building materials, optical components, and the like.

Recently, in order to apply these polycarbonate resins to more various fields, many studies have been made to obtain desired physical properties by copolymerizing two or more aromatic diol compounds having different structures from each other and introducing units having different structures in a main chain of the polycarbonate. In addition, studies for introducing a polysiloxane structure in a main chain of the polycarbonate have been undergone, but most of these technologies have disadvantages in that when a specific physical property is improved, but other physical properties are deteriorated.

Meanwhile, recently, as a necessity for forming a thin film using the polycarbonate resin has increased, a demand for a polycarbonate based resin having high flowability (fluidity) during a melting process and thus having excellent melt-processability, or a composition thereof has increased. In addition, recently, requirements for various physical properties such as chemical resistance, impact strength, or the like, required in the polycarbonate resin have further increased.

However, generally, in the case of further improving chemical resistance, impact strength, or the like, of the polycarbonate based resin or the composition thereof, flowability may be deteriorated, such that it is difficult to sufficiently achieve thin-film moldability and melt-processability. Therefore, it was difficult to satisfy high flowability and melt-fluidity to exhibit excellent thin-film moldability, or the like, while having excellent chemical resistance, impact strength, and the like, required in the polycarbonate based resin.

Therefore, a polycarbonate based resin of which impact strength such as low-temperature impact strength, or the like, flowability (fluidity), melt-processability, and the like, are simultaneously improved, or a composition thereof has been continuously required.

### [DISCLOSURE]

### [Technical Problem]

Problems of the prior art are overcome in accordance with the subject-matter of the independent claim. Preferred embodiments result from the dependent claims.

The present invention has been made in an effort to provide a polycarbonate based resin composition having advantages of improved impact strength, flowability (fluidity), processability, and the like.

The present invention has been made in an effort to provide molded articles containing the polycarbonate based resin composition.
An exemplary embodiment of the present invention provides a polycarbonate based resin composition comprising:
a copolycarbonate resin including a repeating unit represented by the following Chemical Formula 1, a repeating unit represented by the following Chemical Formula 3, and a repeating unit represented by the following Chemical Formula 4; and
a first polycarbonate resin including a repeating unit represented by the following Chemical Formula 2, and
wherein:
   the copolycarbonate resin includes the respective repeating units so that a weight ratio of the repeating unit represented by Chemical Formula 1 and a sum of weights of the repeating units represented by Chemical Formulae 3 and 4 is 1:0.001 to 1:0.5: 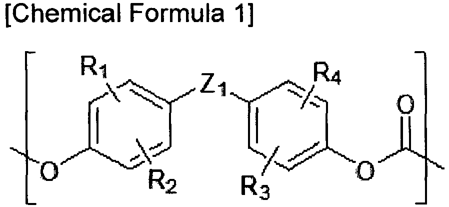 in Chemical Formula 1,
   R₁ to R₄ are each independently hydrogen, C₁₋₁₀ alkyl, C₁₋₁₀ alkoxy, or halogen, Z₁ is C₁₋₁₀ alkylene unsubstituted or substituted with phenyl, C₃₋₁₅ cycloalkylene unsubstituted or substituted with C₁₋₁₀ alkyl, O, S, SO, SO₂, or CO, 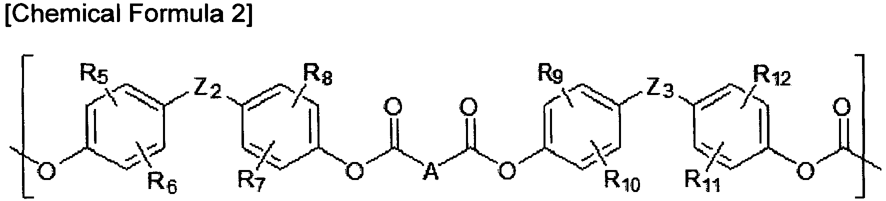 in Chemical Formula 2,
   R₅ to R₁₂ are each independently hydrogen, C₁₋₁₀ alkyl, C₁₋₁₀ alkoxy, or halogen, Z₂ and Z₃ are each independently C₁₋₁₀ alkylene unsubstituted or substituted with phenyl, C₃₋₁₅ cycloalkylene unsubstituted or substituted with C₁₋₁₀ alkyl, O, S, SO, SO₂, or CO, and
   A is C₁₋₁₅ alkylene, 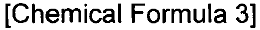 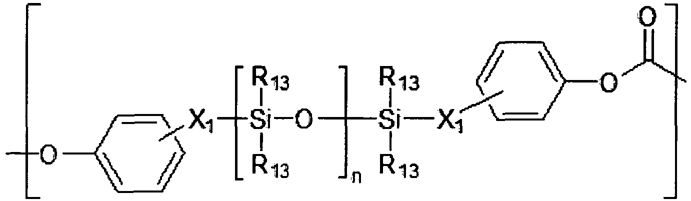
   in Chemical Formula 3,
   each of X₁ is independently C₁₋₁₀ alkylene,
   each of R₁₃ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
   n is an integer of 10 to 200, 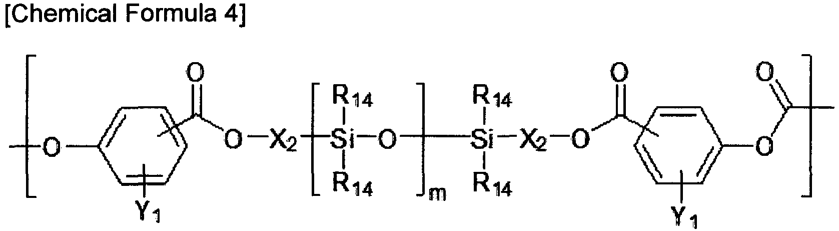
   in Chemical Formula 4,
   each of X₂ is independently C₁₋₁₀ alkylene,
   each of Y₁ is independently hydrogen, C₁₋₆ alkyl, halogen, hydroxy, C₁₋₆ alkoxy, or C₆₋₂₀ aryl,
   each of R₁₄ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
   m is an integer of 10 to 200.

Further disclosed are molded articles containing the polycarbonate based resin composition.

Hereinafter, polycarbonate based resin compositions according to exemplary embodiments of the present invention and molded articles thereof will be described in more detail.

Technical terms used herein are only to describe a specific embodiment, and do not limit the present invention. In addition, singular forms used in the present specification include plural forms as long as they do not have clearly different meanings.

Further, the term 'include' or 'contain' used in the present specification is to specify a specific property, region, integer, step, operation, factor, and/or component, but dose not exclude presence or addition of another specific property, region, integer, step, operation, factor, component, and/or group.

According to the exemplary embodiment of the present invention, there is provided a polycarbonate based resin composition comprising a copolycarbonate resin including a repeating unit represented by the following Chemical Formula 1, a repeating unit represented by the following Chemical Formula 3, and a repeating unit represented by the following Chemical Formula 4; and
a first polycarbonate resin including a repeating unit represented by the following Chemical Formula 2: 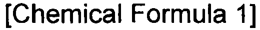 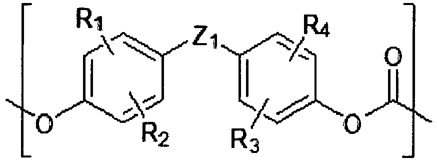 in Chemical Formula 1,
R₁ to R₄ are each independently hydrogen, C₁₋₁₀ alkyl, C₁₋₁₀ alkoxy, or halogen, and
Z₁ is C₁₋₁₀ alkylene unsubstituted or substituted with phenyl, C₃₋₁₅ cycloalkylene unsubstituted or substituted with C₁₋₁₀ alkyl, O, S, SO, SO₂, or CO, 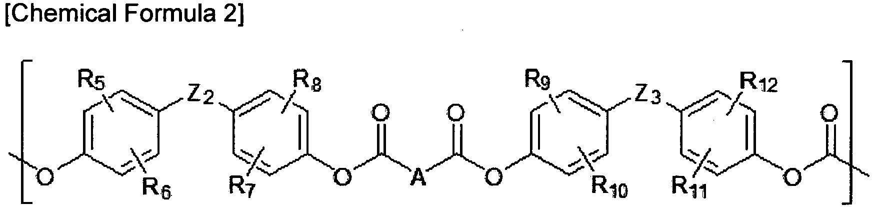
in Chemical Formula 2,
R₅ to R₁₂ are each independently hydrogen, C₁₋₁₀ alkyl, C₁₋₁₀ alkoxy, or halogen,
Z₂ and Z₃ are each independently C₁₋₁₀ alkylene unsubstituted or substituted with phenyl, C₃₋₁₅ cycloalkylene unsubstituted or substituted with C₁₋₁₀ alkyl, O, S, SO, SO₂, or CO, and
A is C₁₋₁₅ alkylene, 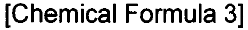 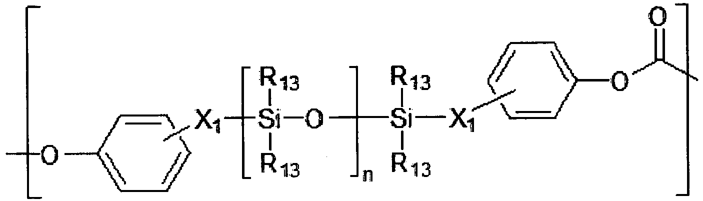
in Chemical Formula 3,
each of X₁ is independently C₁₋₁₀ alkylene,
each of R₁₃ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
n is an integer of 10 to 200, 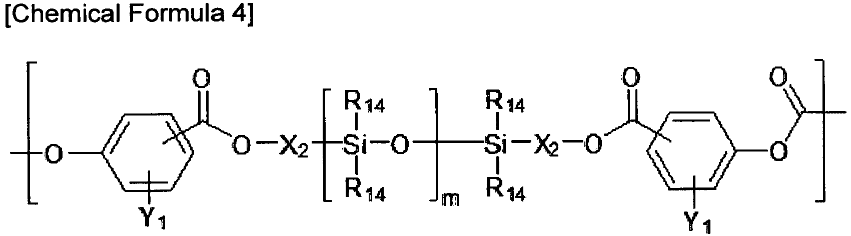
in Chemical Formula 4,
each of X₂ is independently C₁₋₁₀ alkylene,
each of Y₁ is independently hydrogen, C₁₋₆ alkyl, halogen, hydroxy, C₁₋₆ alkoxy, or C₆₋₂₀ aryl,
each of R₁₄ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
m is an integer of 10 to 200.

The first polycarbonate resin may selectively further include a repeating unit repeating unit represented by Chemical Formula 1 in addition to the repeating unit represented by Chemical Formula 2. The repeating unit represented by Chemical Formula 1 may have a structure equal to or different from that of the repeating unit represented by Chemical Formula 1, included in the copolycarbonate resin.

As described above, the resin composition according to the exemplary embodiment may include both of the first polycarbonate resin having the repeating unit represented by Chemical Formula 2, including an aliphatic alkylene A group and the copolycarbonate resin including specific polysiloxane group-containing repeating units represented by Chemical Formulae 3 and 4, together with the repeating unit represented by Chemical Formula 1, which is a repeating unit of a general aromatic polycarbonate. The first polycarbonate resin and a second polycarbonate resin to be described below may be distinguished from the copolycarbonate resin in that a polysiloxane structure is not introduced in a main chain in the first and second polycarbonate resins, but is introduced in a main chain in the copolycarbonate resin as in Chemical Formulae 3 and 4. Hereinafter, unless particularly described, the first and second polycarbonate resins and the copolycarbonate resin may be distinguished and defined as described above.

The first polycarbonate resin having the repeating unit represented by Chemical Formula 2 may allow the resin composition according to the exemplary embodiment to have higher flowability (fluidity) by containing the repeating unit having the aliphatic group A. Further, as a result of continuous experiments by the present inventors, it was confirmed that the copolycarbonate resin having the repeating units represented by Chemical Formulae 3 and 4 may allow the resin composition according to the exemplary embodiment to have improved impact strength (particularly, low-temperature impact strength) and chemical resistance and a low yellow index (YI) value by containing a specific polysiloxane group.

Therefore, it was confirmed that as the resin composition according to the exemplary embodiment simultaneously include the first polycarbonate resin and the copolycarbonate resin, which have these specific repeating unit structures, the resin composition may have excellent flowability and melt-fluidity to thereby have excellent thin-film moldability, and the molded articles thereof may have excellent chemical resistance, excellent impact strength such as low-temperature impact strength, or the like, and a low YI value. Therefore, the resin composition according to the exemplary embodiment may solve problems of polycarbonate based resins known in the art, or the like, and be suitably applied to various fields and uses in which excellent physical properties, and thin-film molding are required.

Hereinafter, each of the components capable of being included in the polycarbonate based resin composition according to the exemplary embodiment of the present invention will be described in detail.

### (1) Copolycarbonate Resin

The copolycarbonate resin, which is a component capable of improving physical properties of an existing aromatic polycarbonate resin, particularly, impact strength, chemical resistance, a YI value, and the like, may be included in the resin composition according to the exemplary embodiment. The copolycarbonate resin may include the repeating unit represented by Chemical Formula 1, which is a basic repeating unit of an aromatic polycarbonate based resin, and the repeating units represented by Chemical Formulae 3 and 4, having a specific polysiloxane unit.

First, the repeating unit represented by Chemical Formula 1, which form a basic backbone of the copolycarbonate resin, may be formed by a reaction of an aromatic diol compound and a carbonate precursor. The repeating unit represented by Chemical Formula 1 as described above may also be included to first and second polycarbonate resins to be described below, and the repeating unit represented by Chemical Formula 1, included in the copolycarbonate resin may have a structure equal to or different from that of the repeating unit represented by Chemical Formula 1, included in the first and second polycarbonate resins.

In Chemical Formula 1, R₁ to R₄ may be each independently, hydrogen, methyl, chloro, or bromo.

Further, Z₁ may be preferably a linear or branched C₁₋₁₀ alkylene unsubstituted or substituted with phenyl, and more preferably, methylene, ethane-1,1-diyl, propane-2,2-diyl, butane-2,2-diyl, 1-phenylethane-1,1-diyl or diphenylmethylene. In addition, Z₁ may be preferably cyclohexane-1,1-diyl, O, S, SO, SO₂, or CO.

Preferably, the repeating unit represented by Chemical Formula 1 may be derived from one or more aromatic diol compounds selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2 ,2-bis(4-hydroxy-3, 5-dichlorophenyl)propane, 2 ,2-bis(4-hydroxy-3-bromophenyl)propane, 2 ,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, and bis(4-hydroxyphenyl)diphenylmethane.

As used herein, 'derived from aromatic diol compounds' means that a hydroxy group of the aromatic diol compound and a carbonate precursor are reacted to form the repeating unit represented by Chemical Formula 1.

For example, when bisphenol A, i.e., an aromatic diol compound, and triphosgene, i.e., a carbonate precursor, are polymerized, the repeating unit represented by Chemical Formula 1 is represented by the following Chemical Formula1-1:

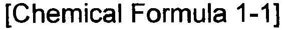

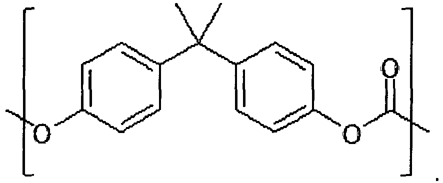

As the carbonate precursor, one or more selected from the group consisting of dimethyl carbonate, diethyl carbonate, dibutyl carbonate, dicyclohexyl carbonate, diphenyl carbonate, ditolyl carbonate, bis(chlorophenyl)carbonate, di-m-cresyl carbonate, dinaphthyl carbonate, bis(diphenyl) carbonate, phosgene, triphosgene, diphosgene, bromo phosgene, and bishaloformate may be used. Preferably, triphosgene or phosgene may be used.

Meanwhile, the copolycarbonate resin may further include the repeating units represented by Chemical Formulae 3 and 4, wherein the repeating units represented by Chemical Formulae 3 and 4, which have a specific polyorganosiloxane structure, may be introduced in the copolycarbonate resin to improve various physical properties such as chemical resistance, low-temperature impact strength, the YI value, and the like.

In Chemical Formula 3, each of X₁ may be independently preferably C₂₋₁₀ alkylene, more preferably C₂₋₄ alkylene, and most preferably propane-1,3-diyl.

Further, preferably, each of R₁₃ may be independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl. In addition, each of R₁₃ may be independently preferably C₁₋₁₀ alkyl, more preferably C₁₋₆ alkyl, still more preferably C₁₋₃ alkyl, and most preferably methyl.

Further, preferably, n may be an integer of 10 or more, 15 or more, 20 or more, 25 or more, 30 or more, 31 or more, or 32 or more; and not more than 50, not more than 45, not more than 40, not more than 39, not more than 38, or not more than 37.

In Chemical Formula 4, each of X₂ may be independently preferably C₂₋₁₀ alkylene, more preferably C₂₋₆ alkylene, and most preferably isobutylene.

In addition, preferably, Y₁ may be hydrogen.

Further, preferably, each of R₁₄ may be independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl. In addition, each of R₁₄ may be independently preferably C₁₋₁₀ alkyl, more preferably C₁₋₆ alkyl, still more preferably C₁₋₃ alkyl, and most preferably methyl.

Further, preferably, m may be an integer of 40 or more, 45 or more, 50 or more, 55 or more, 56 or more, 57 or more, or 58 or more; and not more than 80, not more than 75, not more than 70, not more than 65, not more than 64, not more than 63, or not more than 62.

The repeating unit represented by Chemical Formula 3 and the repeating unit represented by Chemical Formula 4 may be derived from a siloxane compound represented by Chemical Formula 3-1 and a siloxane compound represented by Chemical Formula 4-1, respectively. 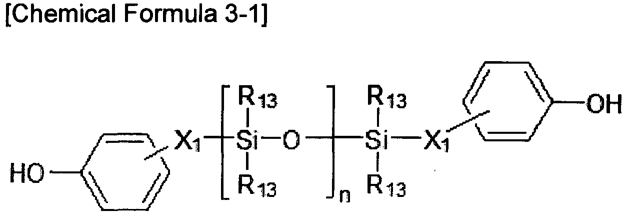 in Chemical Formula 3-1,
X₁, R₁₃, and n are as previously defined. 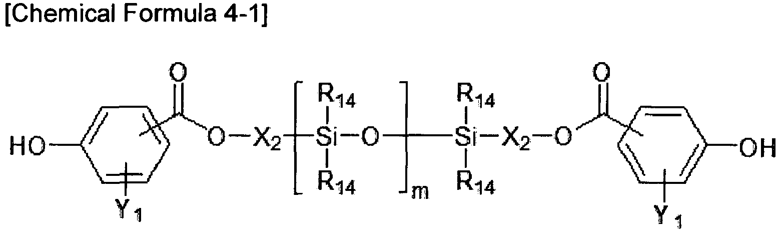 in Chemical Formula 4-1,
X₂, Y₁, R₁₄, and m are as previously defined.

As used herein, 'derived from a siloxane compound' means that a hydroxy group of each of the siloxane compounds and a carbonate precursor are reacted to form the repeating unit represented by Chemical Formula 3 and the repeating unit represented by the Chemical Formula 4. Further, descriptions of the carbonate precursors that may be used for the formation of the repeating units represented by Chemical Formulae 3 and 4 are the same as those described for the carbonate precursor that can be used for the formation of the repeating unit represented by Chemical Formula 1 described above.

The methods for preparing the siloxane compound represented by Chemical Formula 3-1 and the siloxane compound represented by Chemical Formula 4-1 are represented by the following Reaction Schemes 1 and 2, respectively: 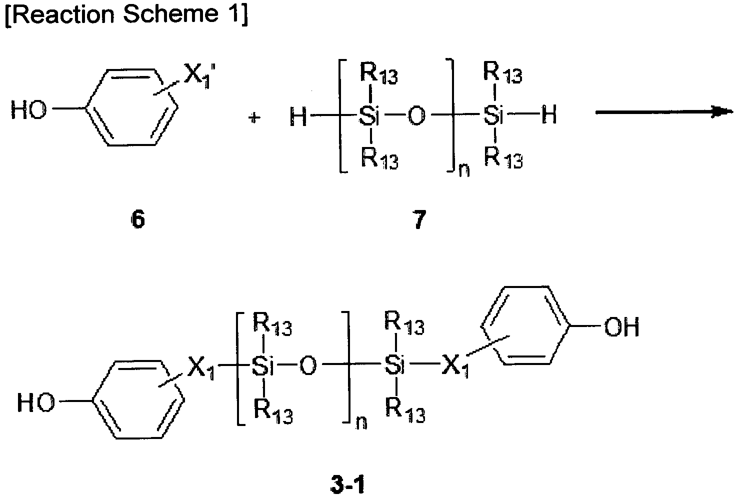 in Reaction Scheme 1,
X₁' is C₂₋₁₀ alkenyl, and
X₁, R₁₃, and n are as previously defined, 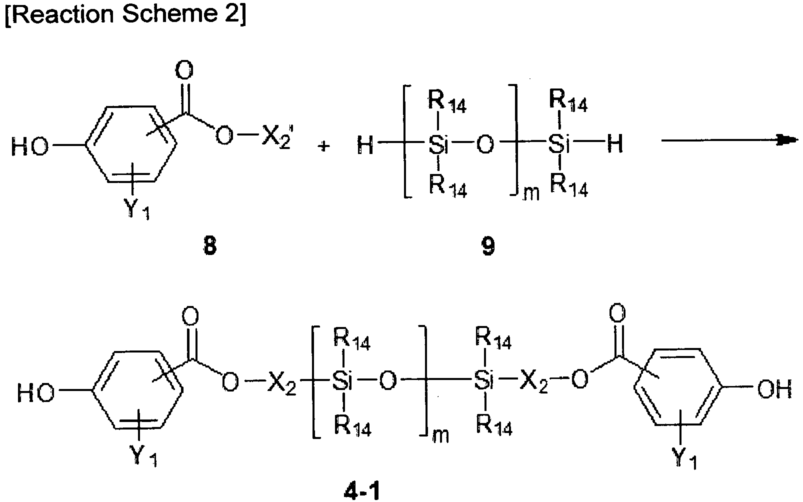
in Reaction Scheme 2,
X₂' is C₂₋₁₀ alkenyl, and
X₂, Y₁, R₁₄, and m are as previously defined.

In Reaction Scheme 1 and Reaction Scheme 2, the reaction may be preferably conducted in the presence of a metal catalyst. As the metal catalyst, a Pt catalyst may be preferably used. The Pt catalyst used herein may include one or more selected from the group consisting of Ashby catalyst, Karstedt catalyst, Lamoreaux catalyst, Speier catalyst, PtCl₂ (COD), PtCl₂(benzonitrile)₂, and H₂PtBr₆. The metal catalyst may be used in an amount of 0.001 parts by weight or more, 0.005 parts by weight or more, or 0.01 parts by weight or more; and not more than 1 part by weight, not more than 0.1 part by weight, or not more than 0.05 part by weight, based on 100 parts by weight of compounds represented by the Chemical Formula 7 or 9.

Further, a reaction temperature is preferably 80 to 100°C. Further, a reaction time is preferably 1 to 5 hours.

In addition, the compound represented by Chemical Formula 7 or 9 may be prepared by reacting an organodisiloxane and an organocyclosiloxane in the presence of an acid catalyst, and n and m may be adjusted by adjusting amounts of the reactants. A reaction temperature is preferably 50 to 70°C. Further, a reaction time is preferably 1 to 6 hours.

As the organodisiloxane, one or more selected from the group consisting of tetramethyldisiloxane, tetraphenyldisiloxane, hexamethyldisiloxane, and hexaphenyldisiloxane may be used. In addition, as the organocyclosiloxane, for example, organocyclotetrasiloxane may be used. Examples of the organocyclotetrasiloxane may include octamethylcyclotetrasiloxane, octaphenylcyclotetrasiloxane, and the like.

The organodisiloxane may be used in an amount of 0.1 parts by weight or more, or 2 parts by weight or more; and not more than 10 parts by weight or not more than 8 parts by weight, based on 100 parts by weight of the organocyclosiloxane.

As the acid catalyst, one or more selected from the group consisting of H₂SO₄, HClO₄, AlCl₃, SbCl₅, SnCl₄ and acid clay (fuller's earth) may be used. Further, the acid catalyst may be used in an amount of 0.1 parts by weight or more, 0.5 parts by weight or more, or 1 part by weight or more; and not more than 10 parts by weight, not more than 5 parts by weight, or not more than 3 parts by weight, based on 100 parts by weight of the organocyclosiloxane.

Physical properties such as chemical resistance, impact resistance, the YI value, and the like, may be simultaneously and suitably improved by adjusting the amounts of the repeating units represented by Chemical Formulae 3 and 4, simultaneously included in the copolycarbonate resin. To this end, a weight ratio between the repeating units represented by Chemical Formulae 3 and 4 may be from 1:99 to 99:1. Preferably, the weight ratio is from 3:97 to 97:3, from 5:95 to 95:5, from 10:90 to 90:10, or from 15:85 to 85:15, and more preferably from 20:80 to 80:20. The weight ratio of the repeating units may correspond to a weight ratio of siloxane compounds, for example, the siloxane compound represented by Chemical Formula 3-1 and the siloxane compound represented by Chemical Formula 4-1.

Preferably, the repeating unit represented by Chemical Formula 3 may be represented by the following Chemical Formula 3-2:

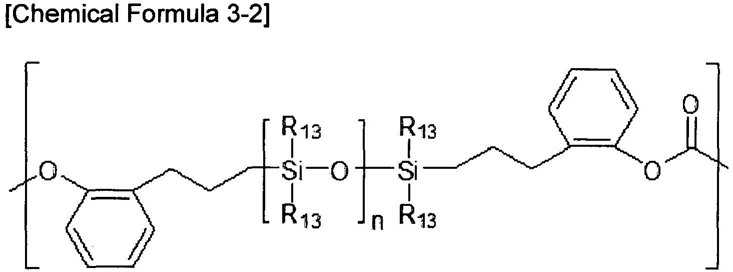

In Chemical Formula 3-2, R₁₃ and n are as previously defined. Preferably, R₁₃ may be methyl.

In addition, preferably, the repeating unit represented by Chemical Formula 4 may be represented by the following Chemical Formula 4-2:

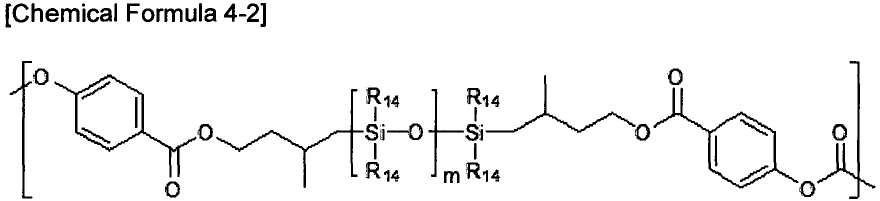

In Chemical Formula 4-2, R₁₄ and m are as previously defined. Preferably, R₁₄ may be methyl.

In addition, the above-mentioned copolycarbonate resin includes each of the repeating units represented by Chemical Formulae 1, 3, and 4 so that a weight ratio of the repeating unit represented by Chemical Formula 1 and a sum of weights of the repeating unit represented by Chemical Formula 3 and the repeating unit represented by Chemical Formula 4 is from 1:0.001 to 1:0.5, preferably, from 1:0.005 to 1:0.3, and more preferably, from 1:0.01 to 1:0.2. The weight ratio of the repeating units may correspond to a weight ratio of the aromatic diol compound used to form the repeating unit represented by Chemical Formula 1 and the siloxane compounds used to form the repeating unit represented by Chemical Formula 3 and the repeating unit represented by Chemical Formula 4.

As the copolycarbonate resin includes each of the repeating units at the above-mentioned weight ratio, the copolycarbonate resin and the resin composition according to the exemplary embodiment may have excellent low-temperature impact strength, chemical resistance and low YI values, and a synergic effect with a first polycarbonate resin to be described below may also be optimized, such that the resin composition according to the exemplary embodiment may have more excellent flowability and thin-film moldability.

Preferably, the copolycarbonate resin including the repeating units represented by Chemical Formulae 1, 3, and 4 may be a random copolymer. In addition, the copolycarbonate resin as described above may be prepared by a preparation method including the step of polymerizing two or more aromatic diol compounds corresponding to the respective repeating units, a carbonate precursor, and two or more siloxane compounds. The aromatic diol compounds, the carbonate precursor, and the siloxane compounds are the same as previously described.

At the time of the polymerization, the siloxane compounds may be used in an amount of 0.1 wt% or more, 0.5 wt% or more, 1 wt% or more, or 1.5 wt% or more; and not more than 20 wt%, not more than 10 wt%, not more than 7 wt%, not more than 5 wt%, not more than 4 wt%, not more than 3 wt%, or not more than 2 wt%, based on 100 wt% in total of the aromatic diol compounds, the carbonate precursor, and the siloxane compounds.

Further, the aromatic diol compounds may be used in an amount of 40 wt% or more, 50 wt% or more, or 55 wt% or more; and not more than 80 wt%, not more than 70 wt%, or not more than 65 wt%, based on 100 wt% in total of the aromatic diol compounds, the carbonate precursor, and the siloxane compounds.

The carbonate precursor may be used in an amount of 10 wt% or more, 20 wt% or more, or 30 wt% or more; and not more than 60 wt%, not more than 50 wt%, or not more than 40 wt%, based on 100 wt% in total of two aromatic diol compounds, the carbonate precursor, and the siloxane compounds.

Further, as a polymerization method, an interfacial polymerization method may be used as one example. In this case, the polymerization reaction may be carried out at a low temperature under an atmospheric pressure, and it may be easy to control a molecular weight. The interfacial polymerization may be preferably conducted in the presence of an acid binder and an organic solvent. Furthermore, the interfacial polymerization may include, for example, the steps of conducting pre-polymerization, then adding a coupling agent and conducting polymerization again. In this case, a copolycarbonate having a high molecular weight may be obtained.

The materials used in the interfacial polymerization are not particularly limited as long as they may be used in polymerization of polycarbonates. The used amount thereof maybe controlled as required.

The acid binder may include, for example, alkali metal hydroxides such as sodium hydroxide, potassium hydroxide, or the like, or amine compounds such as pyridine, or the like.

The organic solvent is not particularly limited as long as it is a solvent that can be usually used in the polymerization of polycarbonates. As one example, halogenated hydrocarbon such as methylene chloride or chlorobenzene, or the like, may be used.

Further, during the interfacial polymerization, a reaction accelerator, for example, a tertiary amine compound such as triethylamine, tetra-n-butylammonium bromide, tetra-n-butylphosphonium bromide, or the like, a quaternary ammonium compound, a quaternary phosphonium compound, or the like, may be further used for accelerating the reaction.

In the interfacial polymerization, a reaction temperature may be preferably from 0 to 40°C and a reaction time may be preferably from 10 minutes to 5 hours. Further, during the interfacial polymerization reaction, pH may be preferably maintained at 9 or more, or 11 or more.

In addition, during the interfacial polymerization reaction, a molecular weight modifier may be additionally used. The molecular weight modifier may be added before the initiation of polymerization, during the initiation of polymerization, or after the initiation of polymerization.

As the molecular weight modifier, mono-alkyl phenol may be used. As one example, the mono-alkyl phenol may be one or more selected from the group consisting of p-tert-butyl phenol, p-cumyl phenol, decyl phenol, dodecyl phenol, tetradecyl phenol, hexadecyl phenol, octadecyl phenol, eicosyl phenol, docosyl phenol and triacontyl phenol. Preferably, the mono-alkyl phenol may be p-tert-butyl phenol. In this case, the effect of adjusting the molecular weight control may be great.

The molecular weight modifier may be included, for example, in an amount of 0.01parts by weight or more, 0.1 parts by weight or more, or 1 part by weight; and not more than 10 parts by weight, not more than 6 parts by weight, or not more than 5 parts by weight, based on 100 parts by weight of the aromatic diol compound. The required molecular weight may be obtained within the range as described above.

Meanwhile, the above-mentioned copolycarbonate resin may have a weight average molecular weight (g/mol) of 1,000 to 100,000. More preferably, the weight average molecular weight may be 15,000 or more, 16,000 or more, 17,000 or more, 18,000 or more, 19,000 or more, 20,000 or more, 21,000 or more, 22,000 or more, 23,000 or more, 24,000 or more, or 25,000 or more; and not more than 40,000, not more than 39,000, not more than 38,000, not more than 37,000, not more than 36,000, not more than 35,000, or not more than 34,000.

### (2) First Polycarbonate Resin

The resin composition according to the exemplary embodiment may include the first polycarbonate resin including the repeating unit represented by Chemical Formula 2, having aliphatic alkylene A and further including the repeating unit represented by Chemical Formula 1, as needed, together with the above-mentioned copolycarbonate resin. As the first polycarbonate resin as described above includes the repeating unit represented by Chemical Formula 2, having the aliphatic group, this resin and the resin composition according the exemplary embodiment comprising the same may have high flowability, processability, thin-film moldability, and the like.

Since a description of the repeating unit represented by Chemical Formula 1, selectively included in this first polycarbonate resin is provided above in the description of the copolycarbonate resin, a detailed description thereof will be omitted.

Meanwhile, the first polycarbonate resin may essentially include the repeating unit represented by Chemical Formula 2, which may distinguish the first polycarbonate resin from a second polycarbonate resin to be described below, that is, a general aromatic polycarbonate resin. In Chemical Formula 2, preferably, R₅ to R₁₂ may be each independently hydrogen, methyl, chloro, or bromo. In addition, preferably, R₅ to R₁₂ may be the same as each other.

Further, preferably, Z₁ and Z₂ may be each independently a linear or branched C₁₋₁₀ alkylene unsubstituted or substituted with phenyl. More preferably, Z₁ and Z₂ may be each independently methylene, ethane-1,1-diyl, propane-2,2-diyl, butane-2,2-diyl, 1-phenylethane-1,1-diyl or diphenylmethylene. In addition, preferably, Z₁ and Z₂ may be each independently cyclohexane-1,1-diyl, O, S, SO, SO₂, or CO. Further, preferably, Z₁ and Z₂ may be the same as each other.

Furthermore, preferably, A may be a linear or branched C₁₋₁₀ alkylene. In addition, A may be preferably a linear C₁₋₁₀ alkylene, more preferably, a linear C₃₋₉ alkylene, and most preferably, octylene.

More specifically, the repeating unit represented by Chemical Formula 2 may be represented by Chemical Formula 2-1:

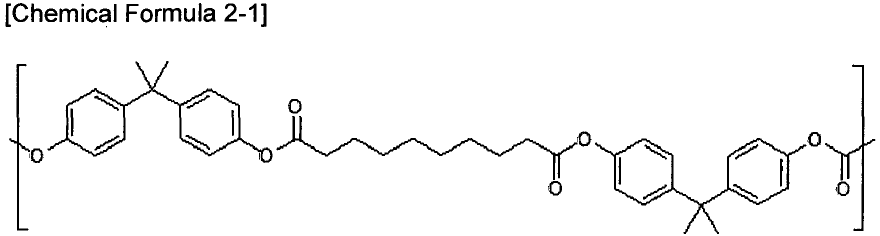

The repeating unit represented by Chemical Formula 2 may be formed by a reaction of an aromatic diol compound represented by the following Chemical Formula 2-2 and a carbonate precursor.

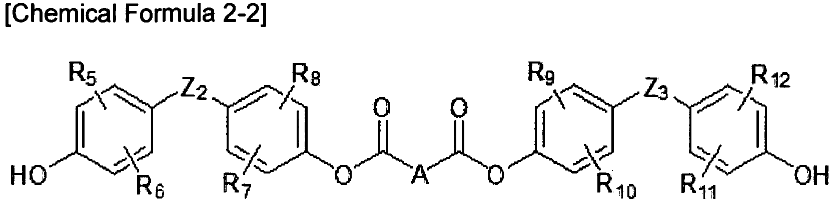

In Chemical Formula 2-2, R₅ to R₁₂, Z₂, Z₃, and A are as previously defined.

A description of the carbonate precursor that may be used for the formation of the repeating unit represented by Chemical Formula 2 is the same as that described for the carbonate precursor that can be used for the formation of the repeating unit represented by Chemical Formula 1 described above.

The first polycarbonate resin may include the repeating unit represented by Chemical Formula 1 and the repeating unit represented by Chemical Formula 2 so as to have a weight ratio of preferably from 1:0.001 to 1:0.3, more preferably from 1:0.004 to 1:0.15, and most preferably from1:0.01 to 1:0.1. The first polycarbonate resin may have suitable mechanical properties and high flowability within the above-mentioned range. The weight ratio may correspond to a weight ratio of the aromatic diol compounds used to form the repeating units represented by Chemical Formulae 1 and 2.

Meanwhile, the above-mentioned first polycarbonate resin may have a weight average molecular weight (g/mol) of 1,000 to 100,000. More preferably, the weight average molecular weight may be 15,000 or more, 16,000 or more, 17,000 or more, 18,000 or more, 19,000 or more, 20,000 or more, 21,000 or more, 22,000 or more, 23,000 or more, 24,000 or more, or 25,000 or more; and not more than 40,000, not more than 39,000, not more than 38,000, not more than 37,000, not more than 36,000, not more than 35,000, or not more than 34,000.

In the polycarbonate based resin composition according to the exemplary embodiment, contents of the copolycarbonate resin and the first polycarbonate resin may be changed depending on physical properties of a composition to be adjusted. For example, the content of the copolycarbonate resin included in the resin composition according to the exemplary embodiment may be from 1 to 99 wt%, from 10 to 90 wt%, from 30 to 70 wt%, or from 40 to 60 wt%, based on 100 wt% of the entire resin composition according to the exemplary embodiment, and the content of the first polycarbonate resin may be the rest except for the content of the copolycarbonate resin, for example, from 1 to 99 wt%, from 10 to 90 wt%, from 30 to 70 wt%, or from 40 to 60 wt%, based on 100 wt% of the resin composition according to the exemplary embodiment.

Therefore, flowability and processability (thin-film moldability), impact strength such as low-temperature impact strength, or the like, chemical resistance, the YI value, and the like, of the resin composition according to the exemplary embodiment may be optimized. However, in the case in which an excessive content of the copolycarbonate resin is added, transparency of the resin composition may be deteriorated, or flowability may not be sufficient, and an effect of improving heat resistance and impact strength may reach a critical value or be rather deteriorated. Further, in the case in which an excessive content of the first polycarbonate resin is added, impact strength, chemical resistance, and the like, of the resin composition may not be sufficient.

Meanwhile, the resin composition according to the exemplary embodiment may further include a second polycarbonate resin corresponding to a general aromatic polycarbonate resin which does not include the repeating units represented by Chemical Formulae 2 to 4 but includes only the repeating unit represented by Chemical Formula 1. The second polycarbonate resin as described above may be distinguished from the copolycarbonate resin and the first polycarbonate resin by the fact that the second polycarbonate resin does not include the repeating units represented by Chemical Formulae 2 to 4.

The repeating unit represented by Chemical Formula 1, included in the second polycarbonate resin may have a structure equal to or different from the repeating unit represented by Chemical Formula 1 within the same category, included in the copolycarbonate resin and the first polycarbonate resin described above.

Since a description of the repeating unit represented by Chemical Formula 1 is provided above in the description of the copolycarbonate resin, the second polycarbonate resin corresponding to the general aromatic polycarbonate resin including the repeating unit represented by Chemical Formula 1 may be prepared and provided by a method well-known to those skilled in the art, an additional description thereof will be omitted.

A suitable content of the second polycarbonate resin as described above may be added to the resin composition according to the exemplary embodiment by those skilled in the art depending on the desired physical properties or purposes. However, the second polycarbonate resin may be included in a content range of 5 to 100 parts by weight based on 100 parts by weight of a sum of the copolycarbonate resin and the first polycarbonate resin described above, so as not to inhibit excellent physical properties and effects of the resin composition according to the exemplary embodiment obtained by including the copolycarbonate resin and the first polycarbonate resin.

Room-temperature impact strength of the above-mentioned resin composition according to the exemplary embodiment measured in accordance with ASTM D256 (1/8 inch, Notched Izod) at 23 °C may be from 500 to 1100 J/m. More preferably, the room-temperature impact strength (J/m) may be 650 or more, 700 or more, or 750 or more. In addition, the higher the room-temperature impact strength (J/m), the more excellent, such that there is no upper limit in the room-temperature impact strength (J/m), but the room-temperature impact strength (J/m) may be, for example, not more than 1050, or not more than 1000.

In addition low-temperature impact strength of the resin composition according to the exemplary embodiment measured in accordance with ASTM D256 (1/8 inch, Notched Izod) at -30°C may be from 350 to 1,000 J/m. More preferably, the low-temperature impact strength (J/m) may be 450 or more, 550 or more, 650 or more, or 680 or more. In addition, the higher the low-temperature impact strength (J/m), the more excellent, such that there is no upper limit in the low-temperature impact strength (J/m), but the low-temperature impact strength (J/m) may be, for example, not more than 990, or not more than 980.

A YI value of the resin composition according to the exemplary embodiment measured in accordance with ASTM D1925 may be not more than 3. More preferably, the YI value may be not more than 2.5, not more than 2, not more than 1.99, or not more than 1.98. In addition, since the lower the YI value, the more excellent, there is no lower limit in the YI value, but for example, the YI value may be 0.5 or more, 1 or more or 1.5 or more.

In addition, flowability of the resin composition according to the exemplary embodiment measured in accordance with ASTM D 1238 (300° C, 1.2 kg condition) may be from 5 to 20 g/10 min. More preferably, the flowability (g/10 min) may be 5.5 or more, 6 or more, or 6.5 or more; and not more than 19, not more than 18, not more than 17, not more than 16, not more than 15, or not more than 14.

Meanwhile, another exemplary embodiment of the present invention provides molded articles containing the polycarbonate based resin composition according to the exemplary embodiment described above.

Preferably, the molded articles may be injection-molded articles. In addition, the molded articles may further include, for example, one or more additives selected from the group consisting of antioxidants, heat stabilizers, light stabilizers, plasticizers, antistatic agents, nucleating agents, flame retardants, lubricants, impact reinforcing agents, fluorescent brightening agents, ultraviolet absorbers, pigments, and dyes.

A method for preparing the molded article may include the steps of mixing the resin composition according to the exemplary embodiment and additives such as antioxidants, or the like, using a mixer, extrusion-molding the mixture with an extruder to produce a pellet, drying the pellet and then injecting the dried pellet with an injection molding machine.

### [Advantageous Effects]

As set forth above, according to an embodiment of the present invention, the polycarbonate based resin composition of which flowability (fluidity), processability, thin-film moldability and the like, in addition to impact strength, chemical resistance, and the YI value are improved, and molded articles thereof may be provided.

### [Mode for Invention]

Hereinafter, preferable Examples of the present invention will be provided for better understanding of the present invention. However, the following Examples are provided only for illustration of the present invention, and should not be construed as limiting the present invention by the examples.

### Preparation Example 1: Preparation of Polyorganosiloxane AP-30

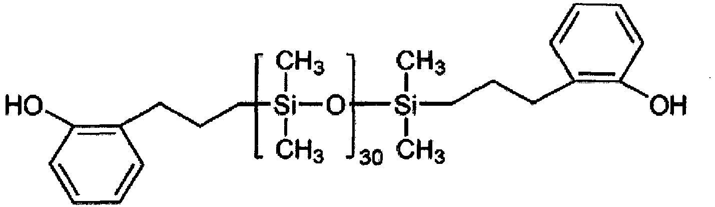

After 42.5 g (142.8 mmol) of octamethylcyclotetrasiloxane and 2.26 g (16.8 mmol) of tetramethyldisiloxane were mixed with each other, the mixture was placed in a 3L flask with 1 part by weight of acid clay (DC-A3) based on 100 parts by weight of octamethylcyclotetrasiloxane, and reacted at 60 °C for 4 hours. After the reaction was terminated, the reaction product was diluted with ethylacetate and quickly filtered using a celite. A repeating unit (n) of the unmodified polyorganosiloxane obtained as described above was 30 when confirmed through ¹H NMR.

9.57 g (71.3 mmol) of 2-allylphenol and 0.01g (50 ppm) of Karstedt's platinum catalyst were added to the obtained terminal-unmodified polyorganosiloxane and reacted at 90°C for 3 hours. After the reaction was terminated, the unreacted polyorganosiloxane was removed by evaporation at 120°C and 1 torr. The terminal-modified polyorganosiloxane obtained as described above was designated as AP-30. AP-30 was pale yellow oil, the repeating unit(n) was 30 when confirmed through ¹HNMR using Varian 500MHz, and further purification was not required.

### Preparation Example 2: Preparation of Polyorganosiloxane MB-60

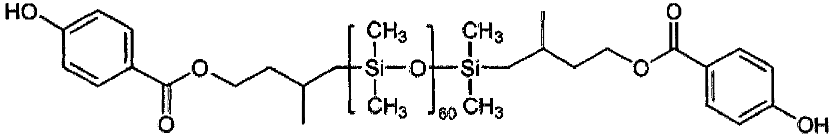

After 47.60 g (160 mmol) of octamethylcyclotetrasiloxane and 1.5 g (11 mmol) of tetramethyldisiloxane were mixed with each other, the mixture was placed in a 3L flask together with 1 part by weight of acid clay (DC-A3) based on 100 parts by weight of octamethylcyclotetrasiloxane, and reacted at 60°C for 4 hours. After the reaction was terminated, the reaction product was diluted with ethylacetate and quickly filtered using a celite. A repeating unit (n) of the terminal-unmodified polyorganosiloxane obtained as described above was 60 when confirmed through ¹H NMR.

6.13 g (29.7 mmol) of 3-methylbut-3-enyl 4-hydroxybenzoate and 0.01g (50 ppm) of Karstedt's platinum catalyst were added to the obtained terminal-unmodified polyorganosiloxane and reacted at 90°C for 3 hours. After the reaction was terminated, the unreacted polyorganosiloxane was removed by evaporation at 120°C and 1 torr. The terminal-modified polyorganosiloxane obtained as described above was designated as MB-60. MB-60 was pale yellow oil, the repeating unit (m) was 60 when confirmed through ¹HNMR using Varian 500MHz, and further purification was not required.

### Preparation Example 3: Preparation 1 of Copolycarbonate Resin

After placing 979.9 g of bisphenol A (BPA), 1,620 g of 32% aqueous NaOH solution, and 7,500 g of distilled water in a 20L glass reactor and confirming that BPA was completely dissolved under nitrogen atmosphere, 3,670 g of methylene chloride, 17.9 g of p-tert-butylphenol (PTBP), 79.3179g of previously prepared polyorganosiloxane (AP-30), and 8.8191 g of polyorganosiloxane (MB-60) of Preparation Example 2 were added thereto and mixed therewith (9 wt% of polyorganosiloxanes (AP-30+MB-60) were used based on BPA; repeating units represented by Chemical Formulae 1, 3, and 4 were formed so as to have contents corresponding thereto). 3,850 g of methylene chloride in which 542.5 g of triphosgene was dissolved was added thereto dropwise for 1 hour. In this case, a PH of the aqueous NaOH solution was maintained at 12. After the dropwise addition was completed, the mixture was aged for 15 minutes, and 195.7 g of triethylamine was dissolved in methylene chloride and added thereto. After 10 minutes, a pH was adjusted to 3 with 1N aqueous hydrochloric acid solution, and then the resultant was washed with distilled water three times. Thereafter, a methylene chloride phase was separated, and precipitated in methanol, thereby obtaining a copolycarbonate resin (Mw: 34000) as powder.

### Preparation Example 4: Preparation 2 of Copolycarbonate Resin

After placing 979.9g of bisphenol A (BPA), 1,620 g of 32% aqueous NaOH solution, and 7,500 g of distilled water in a 20L glass reactor and confirming that BPA was completely dissolved under nitrogen atmosphere, 3,670 g of methylene chloride, 17.9 g of p-tert-butylphenol (PTBP), 83.7814 g of previously prepared polyorganosiloxane (AP-30), and 4.4096 g of polyorganosiloxane (MB-60) of Preparation Example 2 were added thereto and mixed therewith (9 wt% of polyorganosiloxanes (AP-30+MB-60) were used based on BPA; repeating units represented by Chemical Formulae 1, 3, and 4 were formed so as to have contents corresponding thereto). 3,850 g of methylene chloride in which 542.5 g of triphosgene was dissolved was added thereto dropwise for 1 hour. In this case, a PH of the aqueous NaOH solution was maintained at 12. After the dropwise addition was completed, the mixture was aged for 15 minutes, and 195.7 g of triethylamine was dissolved in methylene chloride and added thereto. After 10 minutes, a pH was adjusted to 3 with 1N aqueous hydrochloric acid solution, and then the resultant was washed with distilled water three times. Thereafter, a methylene chloride phase was separated, and precipitated in methanol, thereby obtaining a copolycarbonate resin (Mw: 34000) as powder.

### Preparation Example 5: Preparation 3 of Copolycarbonate Resin

After placing 979.9 g of bisphenol A (BPA), 1,620 g of 32% aqueous NaOH solution, and 7,500 g of distilled water in a 20L glass reactor and confirming that BPA was completely dissolved under nitrogen atmosphere, 3,670 g of methylene chloride, 17.9 g of p-tert-butylphenol (PTBP), 52.914 g of previously prepared polyorganosiloxane (AP-30), and 5.88 g of polyorganosiloxane (MB-60) of Preparation Example 2 were added thereto and mixed therewith (6 wt% of polyorganosiloxanes (AP-30+MB-60) were used based on BPA; repeating units represented by Chemical Formulae 1, 3, and 4 were formed so as to have contents corresponding thereto). 3,850 g of methylene chloride in which 542.5 g of triphosgene was dissolved was added thereto dropwise for 1 hour. In this case, a PH of the aqueous NaOH solution was maintained at 12. After the dropwise addition was completed, the mixture was aged for 15 minutes, and 195.7 g of triethylamine was dissolved in methylene chloride and added thereto. After 10 minutes, a pH was adjusted to 3 with 1N aqueous hydrochloric acid solution, and then the resultant was washed with distilled water three times. Thereafter, a methylene chloride phase was separated, and precipitated in methanol, thereby obtaining a copolycarbonate resin (Mw: 34000) as powder.

### Preparation Example 6: Preparation 4 of Copolycarbonate Resin

After placing 979.9 g of bisphenol A (BPA), 1,620 g of 32% aqueous NaOH solution, and 7,500 g of distilled water in a 20L glass reactor and confirming that BPA was completely dissolved under nitrogen atmosphere, 3,670 g of methylene chloride, 17.9 g of p-tert-butylphenol (PTBP), and 88.191 g of previously prepared polyorganosiloxane (AP-30) were added thereto and mixed therewith (9 wt% of polyorganosiloxane (AP-30) was used based on BPA; repeating units represented by Chemical Formulae 1 and 3 were formed so as to have contents corresponding thereto). 3,850 g of methylene chloride in which 542.5 g of triphosgene was dissolved was added thereto dropwise for 1 hour. In this case, a PH of the aqueous NaOH solution was maintained at 12. After the dropwise addition was completed, the mixture was aged for 15 minutes, and 195.7 g of triethylamine was dissolved in methylene chloride and added thereto. After 10 minutes, a pH was adjusted to 3 with 1N aqueous hydrochloric acid solution, and then the resultant was washed with distilled water three times. Thereafter, a methylene chloride phase was separated, and precipitated in methanol, thereby obtaining a copolycarbonate resin (Mw: 34000) as powder.

### Preparation Example 7: Preparation 1 of First Polycarbonate Resin

After placing 976.9g of bisphenol A (BPA), 1,620 g of 32% aqueous NaOH solution, and 7,500 g of distilled water in a 20L glass reactor and confirming that BPA was completely dissolved under nitrogen atmosphere, 3,670 g of methylene chloride, 17.9 g of p-tert-butylphenol (PTBP), and 7.81 g of previously prepared bis(4-(2-(4-hydroxyphenyl)propan-2-yl)phenyl) decanedioate (BPDA) were added thereto and mixed therewith (0.8 wt% of BPDA was used based on BPA; repeating units represented by Chemical Formulae 1 and 2 were formed so as to have contents corresponding thereto). 3,850 g of methylene chloride in which 542.5 g of triphosgene was dissolved was added thereto dropwise for 1 hour. In this case, a PH of the aqueous NaOH solution was maintained at 12. After the dropwise addition was completed, the mixture was aged for 15 minutes, and 195.7 g of triethylamine was dissolved in methylene chloride and added thereto. After 10 minutes, a pH was adjusted to 3 with 1N aqueous hydrochloric acid solution, and then the resultant was washed with distilled water three times. Thereafter, a methylene chloride phase was separated, and precipitated in methanol, thereby obtaining a polycarbonate resin (Mw: 34000) as powder.

### Preparation Example 8: Preparation 2 of First Polycarbonate Resin

After placing 968.9g of bisphenol A (BPA), 1,620 g of 32% aqueous NaOH solution, and 7,500 g of distilled water in a 20L glass reactor and confirming that BPA was completely dissolved under nitrogen atmosphere, 3,670 g of methylene chloride, 17.9 g of p-tert-butylphenol (PTBP), and 29.32 g of previously prepared bis(4-(2-(4-hydroxyphenyl)propan-2-yl)phenyl) decanedioate (BPDA) were added thereto and mixed therewith (3.0 wt% of BPDA was used based on BPA; repeating units represented by Chemical Formulae 1 and 2 were formed so as to have contents corresponding thereto). 3,850 g of methylene chloride in which 542.5 g of triphosgene was dissolved was added thereto dropwise for 1 hour. In this case, a PH of the aqueous NaOH solution was maintained at 12. After the dropwise addition was completed, the mixture was aged for 15 minutes, and 195.7 g of triethylamine was dissolved in methylene chloride and added thereto. After 10 minutes, a pH was adjusted to 3 with 1N aqueous hydrochloric acid solution, and then the resultant was washed with distilled water three times. Thereafter, a methylene chloride phase was separated, and precipitated in methanol, thereby obtaining a polycarbonate resin (Mw: 34000) as powder.

### Preparation Example 9: Preparation 3 of First Polycarbonate Resin

After placing 943.7g of bisphenol A (BPA), 1,620 g of 32% aqueous NaOH solution, and 7,500 g of distilled water in a 20L glass reactor and confirming that BPA was completely dissolved under nitrogen atmosphere, 3,670 g of methylene chloride, 17.9 g of p-tert-butylphenol (PTBP), and 96.34 g of previously prepared bis(4-(2-(4-hydroxyphenyl)propan-2-yl)phenyl) decanedioate (BPDA) were added thereto and mixed therewith (10.0 wt% of BPDA was used based on BPA; repeating units represented by Chemical Formulae 1 and 2 were formed so as to have contents corresponding thereto). 3,850 g of methylene chloride in which 542.5 g of triphosgene was dissolved was added thereto dropwise for 1 hour. In this case, a PH of the aqueous NaOH solution was maintained at 12. After the dropwise addition was completed, the mixture was aged for 15 minutes, and 195.7 g of triethylamine was dissolved in methylene chloride and added thereto. After 10 minutes, a pH was adjusted to 3 with 1N aqueous hydrochloric acid solution, and then the resultant was washed with distilled water three times. Thereafter, a methylene chloride phase was separated, and precipitated in methanol, thereby obtaining a polycarbonate resin (Mw: 34000) as powder.

### Preparation Example 10: Preparation 4 of polycarbonate Resin

After placing 979.9g of bisphenol A (BPA), 1,620 g of 32% aqueous NaOH solution, and 7,500 g of distilled water in a 20L glass reactor and confirming that BPA was completely dissolved under nitrogen atmosphere,

3,670 g of methylene chloride and 17.9 g of p-tert-butylphenol (PTBP) were added thereto and mixed therewith. 3,850 g of methylene chloride in which 542.5 g of triphosgene was dissolved was added thereto dropwise for 1 hour. In this case, a PH of the aqueous NaOH solution was maintained at 12. After the dropwise addition was completed, the mixture was aged for 15 minutes, and 195.7 g of triethylamine was dissolved in methylene chloride and added thereto. After 10 minutes, a pH was adjusted to 3 with 1N aqueous hydrochloric acid solution, and then the resultant was washed with distilled water three times. Thereafter, a methylene chloride phase was separated, and precipitated in methanol, thereby obtaining a polycarbonate resin (Mw: 34000) as powder.

### Examples 1 to 5 and Comparative Examples 1 to 5: Preparation of Polycarbonate Based Resin Composition and Molded Articles Thereof

The copolycarbonate resin and the polycarbonate resin were mixed according to the composition illustrated in the following Table 1. Additionally, based on 1 part by weight of the resin mixture, 0.050 parts by weight of tris(2,4-di-tert-butylphenyl)phosphite, 0.010 parts by weight of octadecyl-3-(3,5-di-tert-butyl-4-hydroxyphenyl)propionate, and 0.030parts by weight of pentaerythritoltetrastearate were added thereto, and the resulting mixture was pelletized using a Φ30 mm twin-screw extruder provided with a vent, and was injection-molded at a cylinder temperature of 300°C and a mold temperature of 80°C using a N-20C injection-molding machine (JSW Co.), thereby preparing a desired specimen.

**[Table 1]**

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| Co-PC Resin* | Preparation Example 3 | Preparation Example 3 | Preparation Example 3 | Preparation Example 4 | Preparation Example 5 | X | Preparation Example 3 | X | Preparation Example 6 | Preparation Example 6 |
| (wt%) | (50) | (50) | (50) | (50) | (50) | (0) | (100) | (0) | (100) | (50) |
| First PC resin* | Preparation Example 7 | Preparation Example 8 | Preparation Example 9 | Preparation Example 8 | Preparation Example 8 | Preparation Example 10* | X | Preparation Example 9 | X | Preparation Example 9 |
| (wt%) | (50) | (50) | (50) | (50) | (50) | (100) | (0) | (100) | (0) | (50) |

| | | | | | | | | | | |
|---|---|---|---|---|---|---|---|---|---|---|
| * Co-PC resin: Copolycarbonate resin * first PC resin: first polycarbonate resin * Preparation Example 10: Since the specimen was prepared without using BPDA, the specimen did not correspond to the first polycarbonate resin, but corresponded to a general polycarbonate resin (corresponding to the second polycarbonate resin). | | | | | | | | | | |

### Experimental Example: Confirm of Characteristics of Polycarbonate Based Resin Composition and Injected Specimen

Weight average molecular weights of the copolycarbonate resins and the polycarbonate resins prepared in Examples and Comparative Examples were measured by GPC using PC standard and Agilent 1200 series.

In addition, physical properties of the compositions and injection specimens obtained in Examples and Comparative Examples were measured by the following methods, and the results were illustrated in the following Table 2.
1) Room-Temperature Impact Strength: measured at 23°C in accordance with ASTM D256 (1/8 inch, Notched Izod).
2) Low-Temperature Impact Strength: measured at -30°C in accordance with ASTM D256 (1/8 inch, Notched Izod).
3) YI(Yellow Index): Specimen (width/length/thickness= 60 mm/40 mm/ 3 mm) was injection-molded at 300°C, and then YI (Yellow Index) was measured under the following conditions by using Color-Eye 7000A (X-rite Inc.) in accordance with ASTM D1925.
   - Measurement temperature: room temperature (23°C)
   - Aperture size: Large area of view
   Measurement method: transmittance was measured in a spectral range (360 nm to 750 nm)
4) Flowability (MI): measured in accordance with ASTM D1238 (300° C, 1.2kg condition).

**[Table 2]**

| | Room-Temperature Impact Strength (J/m) | Low-temperature Impact Strength (J/m) | YI | MI (g/10 min) |
|---|---|---|---|---|
| Example 1 | 980 | 900 | 1.98 | 6.8 |
| Example 2 | 900 | 830 | 1.98 | 7.1 |
| Example 3 | 830 | 810 | 1.95 | 12.2 |
| Example 4 | 845 | 780 | 1.96 | 6.8 |
| Example 5 | 800 | 680 | 1.94 | 8.1 |
| Comparative Example 1 | 950 | 190 | 1.75 | 5.7 |
| Comparative Example 2 | 1090 | 980 | 6.8 | 3.1 |
| Comparative Example 3 | 820 | 230 | 0.93 | 15.9 |
| Comparative Example 4 | 800 | 520 | 6.3 | 4.3 |
| Comparative Example 5 | 720 | 460 | 1.98 | 10.9 |

Referring to Table 2, it was confirmed that in Examples 1 to 5, high room-temperature impact strength and low-temperature impact strength, a low YI value, and relatively high flowability (MI) were simultaneously exhibited. On the contrary, it was confirmed that in Comparative Examples 1, 3, and 5, low-temperature impact strength was low. Particularly, as illustrated in Comparative Example 5, it was confirmed that in a case in which a structure of the copolycarbonate resin was different from that in Examples, low-temperature impact strength was deteriorated.

Further, it was confirmed that in Comparative Examples 2 and 4, flowability was poor, a YI value was high as compared to Examples, and in Comparative Example 4, low-temperature impact strength was also not sufficient.

## Claims

1. A polycarbonate based resin composition comprising:
a copolycarbonate resin including a repeating unit represented by the following Chemical Formula 1, a repeating unit represented by the following Chemical Formula 3, and a repeating unit represented by the following Chemical Formula 4; and
a first polycarbonate resin including a repeating unit represented by the following Chemical Formula 2, and
wherein:
the copolycarbonate resin includes the respective repeating units so that a weight ratio of the repeating unit represented by Chemical Formula 1 and a sum of weights of the repeating units represented by Chemical Formulae 3 and 4 is 1:0.001 to 1:0.5: 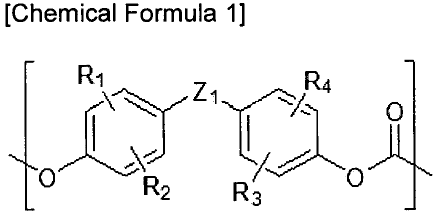 in Chemical Formula 1,
R₁ to R₄ are each independently hydrogen, C₁₋₁₀ alkyl, C₁₋₁₀ alkoxy, or halogen,
Z₁ is C₁₋₁₀ alkylene unsubstituted or substituted with phenyl, C₃₋₁₅ cycloalkylene unsubstituted or substituted with C₁₋₁₀ alkyl, O, S, SO, SO₂, or CO, 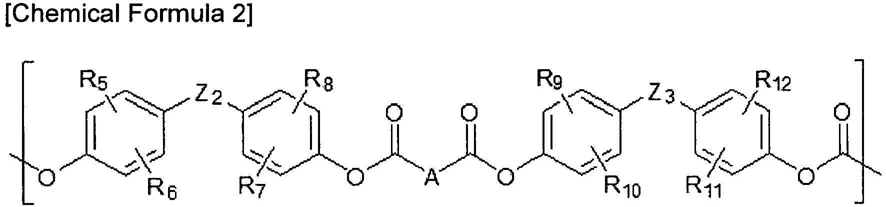
in Chemical Formula 2,
R₅ to R₁₂ are each independently hydrogen, C₁₋₁₀ alkyl, C₁₋₁₀ alkoxy, or halogen,
Z₂ and Z₃ are each independently C₁₋₁₀ alkylene unsubstituted or substituted with phenyl, C₃₋₁₅ cycloalkylene unsubstituted or substituted with C₁₋₁₀ alkyl, O, S, SO, SO₂, or CO, and
A is C₁₋₁₅ alkylene, 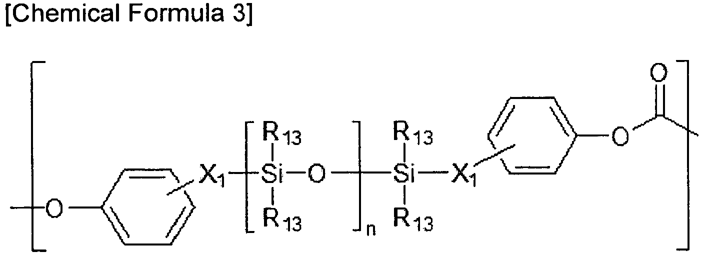
in Chemical Formula 3,
each of X₁ is independently C₁₋₁₀ alkylene,
each of R₁₃ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
n is an integer of 10 to 200, 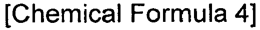 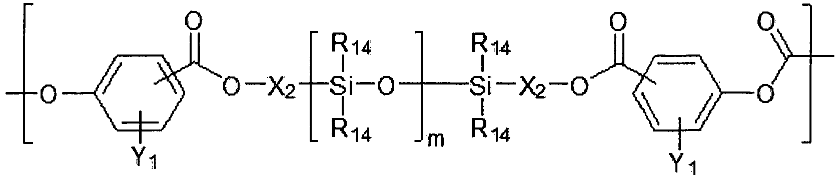
in Chemical Formula 4,
each of X₂ is independently C₁₋₁₀ alkylene,
each of Y₁ is independently hydrogen, C₁₋₆ alkyl, halogen, hydroxy, C₁₋₆ alkoxy, or C₆₋₂₀ aryl,
each of R₁₄ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
m is an integer of 10 to 200.

2. The polycarbonate based resin composition of claim 1, wherein:
the first polycarbonate resin further includes a repeating unit represented by Chemical Formula 1.

3. The polycarbonate based resin composition of claim 1, further comprising a second polycarbonate resin including only a repeating unit represented by Chemical Formula 1.

4. The polycarbonate based resin composition of any one of claim 1 to claim 3, wherein:
the repeating unit represented by Chemical Formula 1 is derived from one or more aromatic diol compounds selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1 -bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, and bis(4-hydroxyphenyl)diphenylmethane.

5. The polycarbonate based resin composition of any one of claim 1 to claim 3, wherein:
the repeating unit represented by Chemical Formula 1 is represented by the following Chemical Formula 1-1:

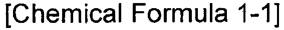

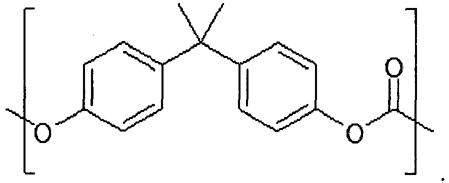

6. The polycarbonate based resin composition of claim 1, wherein:
R₅ to R₁₂ are each independently hydrogen, methyl, chloro, or bromo.

7. The polycarbonate based resin composition of any one of claim 1 to claim 3, wherein:
Z₁ and Z₂ are each independently a linear or branched C₁₋₁₀ alkylene unsubstituted or substituted with phenyl, cyclohexane-1,1-diyl, O, S, SO, SO₂, or CO.

8. The polycarbonate based resin composition of claim 1, wherein:
A is a linear C₁₋₁₀ alkylene.

9. The polycarbonate based resin composition of claim 1, wherein:
the repeating unit represented by Chemical Formula 2 is represented by Chemical Formula 2-1:

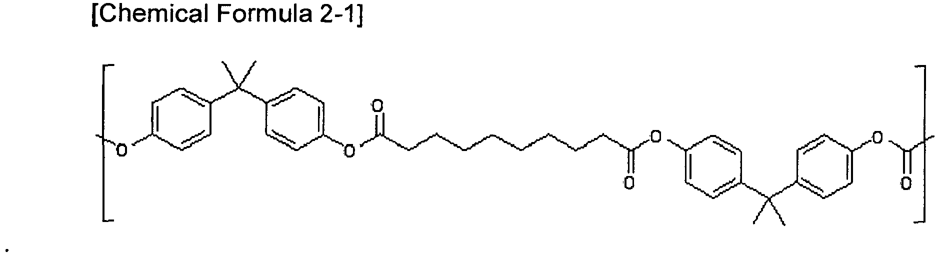

10. The polycarbonate based resin composition of claim 2, wherein:
the first polycarbonate resin includes the repeating unit represented by Chemical Formula 1 and the repeating unit represented by Chemical Formula 2 at a weight ratio of 1: 0.001 to 1: 0.3.

11. The polycarbonate based resin composition of claim 1, wherein:
the repeating unit represented by Chemical Formula 3 is represented by Chemical Formula 3-2:

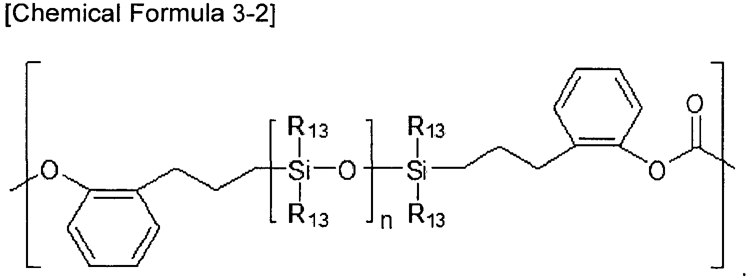

12. The polycarbonate based resin composition of claim 11, wherein:
R₁₃ is methyl.

13. The polycarbonate based resin composition of claim 1, wherein:
the repeating unit represented by Chemical Formula 4 is represented by Chemical Formula 4-2:

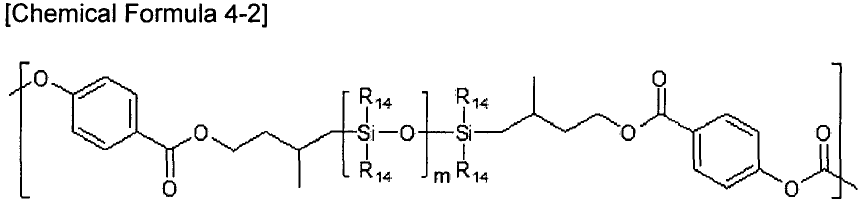

14. The polycarbonate based resin composition of claim 13, wherein:
R₁₄ is methyl.

## Patentansprüche

1. Polycarbonat-basierte Harzzusammensetzung, umfassend:
ein Copolycarbonatharz, das eine Wiederholungseinheit, die durch die folgende chemische Formel 1 dargestellt ist, eine Wiederholungseinheit, die durch die folgende chemische Formel 3 dargestellt ist, und eine Wiederholungseinheit, die durch die folgende chemische Formel 4 dargestellt ist, einschließt; und
ein erstes Polycarbonatharz, das eine Wiederholungseinheit einschließt, die durch die folgende chemische Formel 2 dargestellt ist, und
wobei:
das Copolycarbonatharz die entsprechenden Wiederholungseinheiten so einschließt, dass ein Gewichtsverhältnis der Wiederholungseinheit, die durch die chemische Formel 1 dargestellt ist, und eine Summe der Gewichte der Wiederholungseinheiten, die durch die chemischen Formeln 3 und 4 dargestellt sind, 1 : 0,001 bis 1 : 0,5 ist: 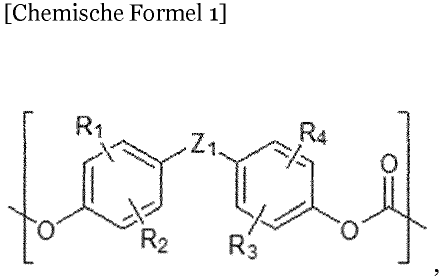 in der chemischen Formel 1
sind R₁ bis R₄ unabhängig Wasserstoff, C₁₋₁₀-Alkyl, C₁₋₁₀-Alkoxy oder Halogen,
ist Z₁ C₁₋₁₀-Alkylen, unsubstituiert oder substituiert mit Phenyl, C₃₋₁₅-Cycloalkylen, unsubstituiert oder substituiert mit C₁₋₁₀-Alkyl, O, S, SO, SO₂ oder CO, 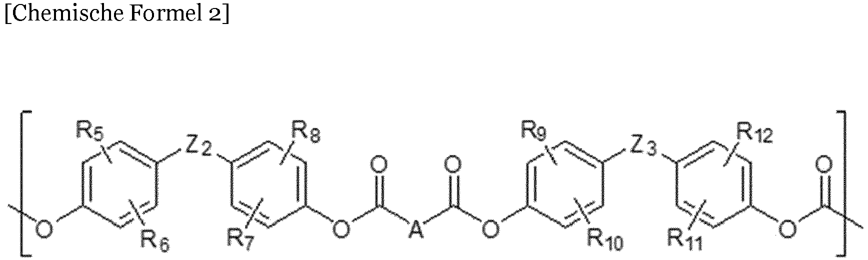
in der chemischen Formel 2
sind R₅ bis R₁₂ jeweils unabhängig voneinander Wasserstoff, C₁₋₁₀-Alkyl, C₁₋₁₀-Alkoxy oder Halogen,
sind Z₂ und Z₃ jeweils unabhängig C₁₋₁₀-Alkylen, unsubstituiert oder substituiert mit Phenyl, C₃₋₁₅-Cycloalkylen, unsubstituiert oder substituiert mit C₁₋₁₀-Alkyl, O, S, SO, SO₂ oder CO, und
ist A C₁₋₁₅-Alkylen, 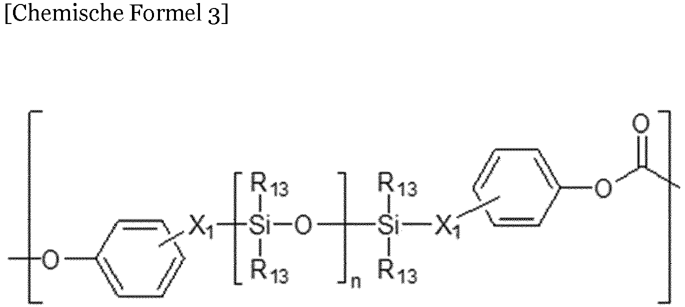
in der chemischen Formel 3
ist X₁ jeweils unabhängig C₁₋₁₀-Alkylen,
ist R₁₃ jeweils unabhängig Wasserstoff; C₁₋₁₅-Alkyl, unsubstituiert oder substituiert mit Oxiranyl, Oxiranyl-substituiertes C₁₋₁₀-Alkoxy oder C₆₋₂₀-Aryl; Halogen; C₁₋₁₀-Alkoxy; Allyl; C₁₋₁₀-Halogenalkyl; oder C₆₋₂₀-Aryl, und
ist n eine ganze Zahl von 10 bis 200, 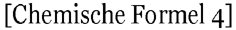 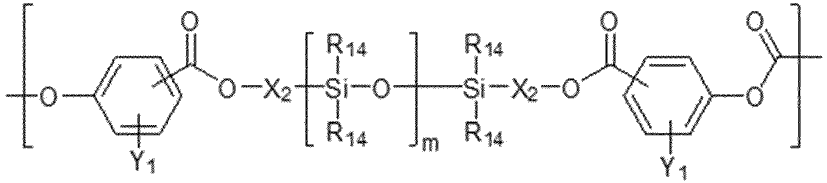
in der chemischen Formel 4
ist X₂ jeweils unabhängig C₁₋₁₀-Alkylen,
ist Y₁ jeweils unabhängig Wasserstoff, C₁₋₆-Alkyl, Halogen, Hydroxy, C₁₋₆-Alkoxy oder C₆₋₂₀-Aryl,
ist R₁₄ jeweils unabhängig Wasserstoff; C₁₋₁₅-Alkyl, unsubstituiert oder substituiert mit Oxiranyl, Oxiranyl-substituiertes C₁₋₁₀-Alkoxy oder C₆₋₂₀-Aryl; Halogen; C₁₋₁₀-Alkoxy; Allyl; C₁₋₁₀-Halogenalkyl; oder C₆₋₂₀-Aryl, und
ist m eine ganze Zahl von 10 bis 200.

2. Polycarbonat-basierte Harzzusammensetzung nach Anspruch 1, wobei:
das erste Polycarbonatharz ferner eine Wiederholungseinheit, die durch die chemische Formel 1 dargestellt ist, einschließt.

3. Polycarbonat-basierte Harzzusammensetzung nach Anspruch 1, die ferner ein zweites Polycarbonatharz umfasst, das lediglich eine Wiederholungseinheit, die durch die chemische Formel 1 dargestellt ist, einschließt.

4. Polycarbonat-basierte Harzzusammensetzung nach einem der Ansprüche 1 bis 3, wobei:
die Wiederholungseinheit, die durch die chemische Formel 1 dargestellt wird, aus einer oder mehreren aromatischen Diolverbindungen erhalten wird, ausgewählt aus der Gruppe, bestehend aus Bis(4-hydroxyphenyl)methan, Bis(4-hydroxyphenyl)ether, Bis(4-hydroxyphenyl)sulfon, Bis(4-hydroxyphenyl)-sulfoxid, Bis(4-hydroxyphenyl)sulfid, Bis(4-hydroxyphenyl)keton, 1,1-Bis(4-hydroxyphenyl)ethan, Bisphenol A, 2,2-Bis(4-hydroxyphenyl)butan, 1,1-Bis(4-hydroxyphenyl)cyclohexan, 2,2-Bis(4-hydroxy-3,5-dibromphenyl)propan, 2,2-Bis(4-hydroxy-3,5-dichlorphenyl)propan, 2,2-Bis(4-hydroxy-3-bromphenyl)-propan, 2,2-Bis(4-hydroxy-3-chlorphenyl)propan, 2,2-Bis(4-hydroxy-3-methylphenyl)propan, 2,2-Bis(4-hydroxy-3,5-dimethylphenyl)propan, 1,1-Bis(4-hydroxyphenyl)-1-phenylethan, Bis(4-hydroxyphenyl)diphenylmethan.

5. Polycarbonat-basierte Harzzusammensetzung nach einem der Ansprüche 1 bis 3, wobei:
die Wiederholungseinheit, die durch die chemische Formel 1 dargestellt wird, durch die folgende chemische Formel 1-1 dargestellt wird:

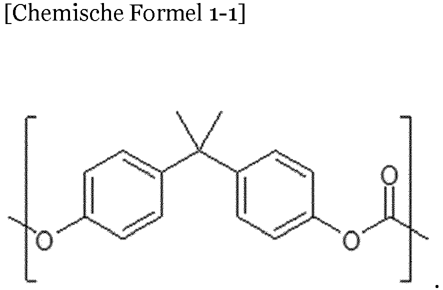

6. Polycarbonat-basierte Harzzusammensetzung nach Anspruch 1, wobei:
R₅ bis R₁₂ jeweils unabhängig Wasserstoff, Methyl, Chlor oder Brom sind.

7. Polycarbonat-basierte Harzzusammensetzung nach einem der Ansprüche 1 bis 3, wobei:
Z₁ und Z₂ jeweils unabhängig ein lineares oder verzweigtes C₁₋₁₀-Alkylen, unsubstituiert oder substituiert mit Phenyl, Cyclohexan-i,i-diyl, O, S, SO, SO₂ oder CO sind.

8. Polycarbonat-basierte Harzzusammensetzung nach Anspruch 1, wobei:
A ein lineares C₁₋₁₀-Alkylen ist.

9. Polycarbonat-basierte Harzzusammensetzung nach Anspruch 1, wobei:
die Wiederholungseinheit, die durch die chemische Formel 2 dargestellt wird, durch die folgende chemische Formel 2-1 dargestellt wird:

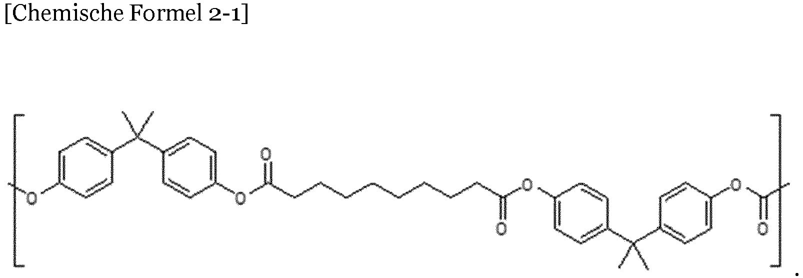

10. Polycarbonat-basierte Harzzusammensetzung nach Anspruch 2, wobei:
das erste Polycarbonatharz die Wiederholungseinheit, die durch die chemische Formel 1 dargestellt ist, und die Wiederholungseinheit, die durch die chemische Formel 2 dargestellt ist, in einem Gewichtsverhältnis von 1 : 0,001 bis 1 : 0,3 einschließt.

11. Polycarbonat-basierte Harzzusammensetzung nach Anspruch 1, wobei:
die Wiederholungseinheit, die durch die chemische Formel 3 dargestellt wird, durch die folgende chemische Formel 3-2 dargestellt wird:

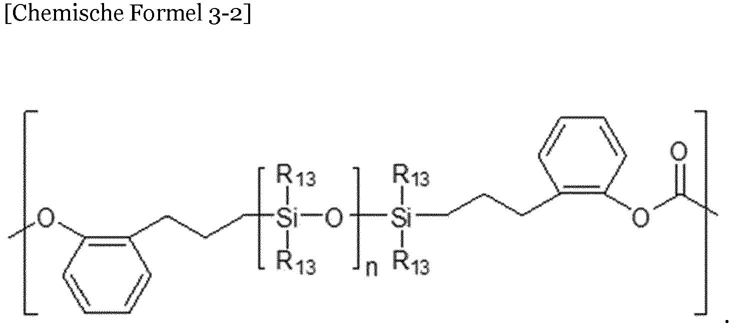

12. Polycarbonat-basierte Harzzusammensetzung nach Anspruch 11, wobei:
R₁₃ Methyl ist.

13. Polycarbonat-basierte Harzzusammensetzung nach Anspruch 1, wobei:
die Wiederholungseinheit, die durch die chemische Formel 4 dargestellt ist, durch die chemische Formel 4-2 dargestellt ist:

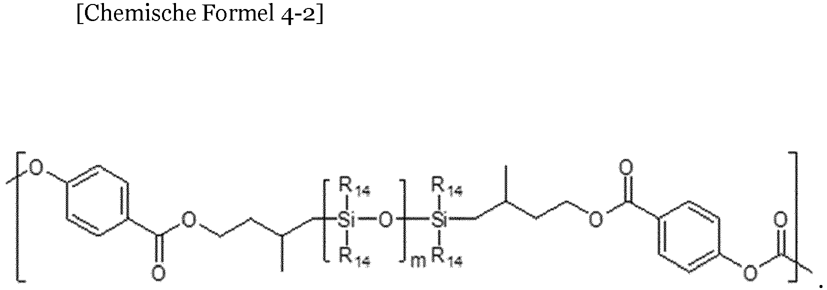

14. Polycarbonat-basierte Harzzusammensetzung nach Anspruch 13, wobei:
R₁₄ Methyl ist.

## Revendications

1. Composition de résine à base de polycarbonate comprenant :
une résine de copolycarbonate incluant une unité de répétition représentée par la Formule chimique 1 ci-après, une unité de répétition représentée par la Formule chimique 3 ci-après et une unité de répétition représentée par la Formule chimique 4 ci-après ; et
une première résine de polycarbonate incluant une unité de répétition représentée par la Formule chimique 2 ci-après, et
dans laquelle :
la résine de copolycarbonate inclut les unités de répétition respectives de telle sorte qu'un rapport en poids de l'unité de répétition représentée par la Formule chimique 1 et d'une somme des poids des unités de répétition représentées par les Formules chimiques 3 et 4 est comprise entre 1:0,001 et 1:0,5 : 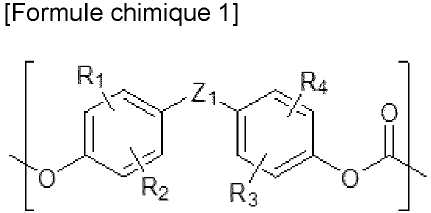 dans la Formule chimique 1,
R₁ à R₄ sont chacun indépendamment un hydrogène, un alkyle en C₁₋₁₀, un alkoxy en C₁₋₁₀ ou un halogène,
Z₁ est un alkylène en C₁₋₁₀ non substitué ou substitué par un phényle, un cycloalkylène en C₃₋₁₅ non substitué ou substitué par un alkyle en C₁₋₁₀,O, S, SO, SO₂ ou CO, 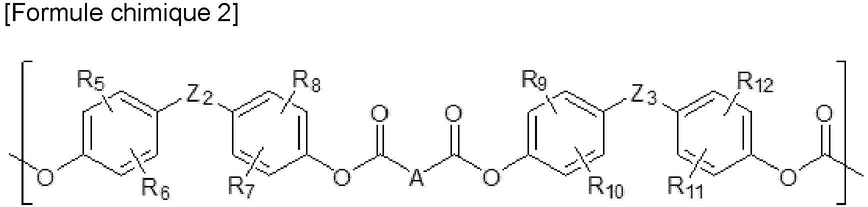
dans la Formule chimique 2,
R₅ à R₁₂ sont chacun indépendamment un hydrogène, un alkyle en C₁₋₁₀, un alkoxy en C₁₋₁₀ ou un halogène,
Z₂ et Z₃ sont chacun indépendamment un alkylène en C₁₋₁₀ non substitué ou substitué par un phényle, un cycloalkylène en C₃₋₁₅ non substitué ou substitué par un alkyle en C₁₋₁₀, O, S, SO, SO₂ ou CO, et
A est un alkylène en C₁₋₁₅, 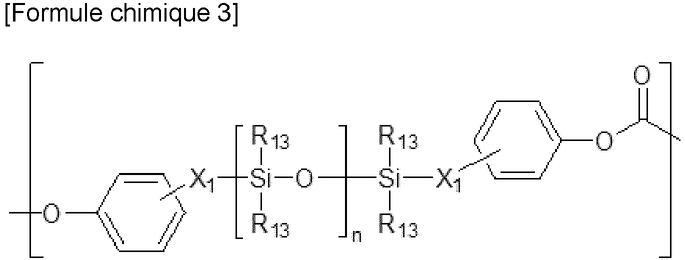
dans la Formule chimique 3,
chacun des X₁ est indépendamment un alkylène en C₁₋₁₀,
chacun des R₁₃ est indépendamment un hydrogène ; un alkyle en C₁₋₁₅ non substitué ou substitué par un oxyranyle, un alkoxy en C₁₋₁₀ ou un aryle en C₆₋₂₀ substitué par un oxyranyle ; un halogène ; un alkoxy en C₁₋₁₀ ; un allyle ; un haloalkyle en C₁₋₁₀ ; ou un aryle en C₆₋₂₀, et
n est un nombre entier de 10 à 200, 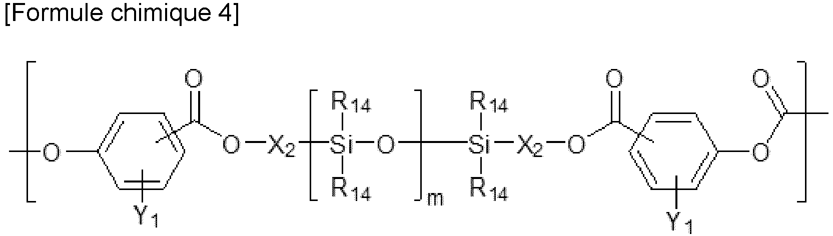
dans la Formule chimique 4,
chacun des X₂ est indépendamment un alkylène en C₁₋₁₀,
chacun des Y₁ est indépendamment un hydrogène, un alkyle en C₁₋₆, un halogène, un hydroxy, un alkoxy en C₁₋₆ ou un aryle en C₆₋₂₀,
chacun des R₁₄ est indépendamment un hydrogène ; un alkyle en C₁₋₁₅ non substitué ou substitué par un oxyranyle, un alkoxy en C₁₋₁₀ ou un aryle en C₆₋₂₀ ; un halogène ; un alkoxy en C₁₋₁₀ ; un allyle ; un haloalkyle en C₁₋₁₀ ; ou un aryle en C₆₋₂₀, et
m est un nombre entier de 10 à 200.

2. Composition de résine à base de polycarbonate selon la revendication 1, dans laquelle :
la première résine de polycarbonate inclut en outre l'unité de répétition représentée par la Formule chimique 1.

3. Composition de résine à base de polycarbonate selon la revendication 1, comprenant en outre une deuxième résine de polycarbonate incluant uniquement une unité de répétition représentée par la Formule chimique 1.

4. Composition de résine à base de polycarbonate selon l'une quelconque des revendications 1 à 3, dans laquelle :
l'unité de répétition représentée par la Formule chimique 1 est dérivée d'un ou plusieurs composés diol aromatiques sélectionnés dans le groupe constitué de bis(4-hydroxyphényl)méthane, bis(4-hydroxyphényl)éther, bis(4-hydroxyphényl)sulfone, bis(4-hydroxyphényl)sulfoxyde, bis(4-hydroxyphényl)sulfure, bis(4-hydroxyphényl)cétone, 1,1-bis(4-hydroxyphényl)éthane, bisphénol A, 2,2-bis(4-hydroxyphényl)butane, 1,1-bis(4-hydroxyphényl)cyclohexane, 2,2-bis(4-hydroxy-3,5-dibromophényl)propane, 2,2-bis(4-hydroxy-3,5-dichlorophényl)propane, 2,2-bis(4-hydroxy-3-bromophényl)propane, 2,2-bis(4-hydroxy-3-chlorophényl)propane, 2,2-bis(4-hydroxy-3-méthylphényl)propane, 2,2-bis(4-hydroxy-3,5-diméthylphényl)propane, 1,1-bis(4-hydroxyphényl)-1-phényléthane et bis(4-hydroxyphényl)diphénylméthane.

5. Composition de résine à base de polycarbonate selon l'une quelconque des revendications 1 à 3, dans laquelle :
l'unité de répétition représentée par la Formule chimique 1 est représentée par la Formule chimique 1-1 ci-après :

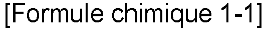

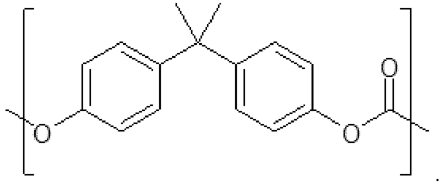

6. Composition de résine à base de polycarbonate selon la revendication 1, dans laquelle :
R₅ à R₁₂ sont chacun indépendamment un hydrogène, un méthyle, un chloro ou un bromo.

7. Composition de résine à base de polycarbonate selon l'une quelconque des revendications 1 à 3, dans laquelle :
Z₁ et Z₂ sont chacun indépendamment un alkylène en C₁₋₁₀ linéaire ou ramifié non substitué ou substitué par un phényle, un cyclohexane-1,1-diyl, O, S, SO, SO₂ ou CO.

8. Composition de résine à base de polycarbonate selon la revendication 1, dans laquelle :
A est un alkylène en C₁₋₁₀ linéaire.

9. Composition de résine à base de polycarbonate selon la revendication 1, dans laquelle :
l'unité de répétition représentée par la Formule chimique 2 est représentée par la Formule chimique 2-1 :

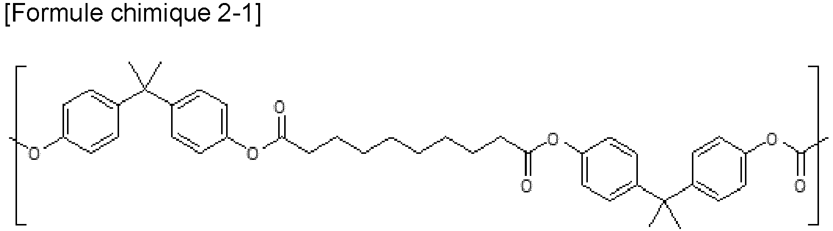

10. Composition de résine à base de polycarbonate selon la revendication 2, dans laquelle :
la première résine de polycarbonate inclut l'unité de répétition représentée par la Formule chimique 1 et l'unité de répétition représentée par la Formule chimique 2 dans un rapport de poids compris entre 1:0,001 et 1:0,3.

11. Composition de résine à base de polycarbonate selon la revendication 1, dans laquelle :
l'unité de répétition représentée par la Formule chimique 3 est représentée par la Formule chimique 3-2 :

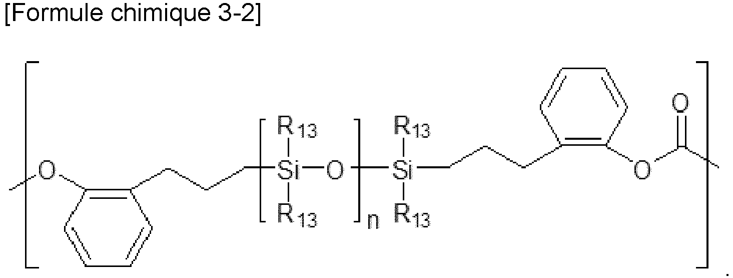

12. Composition de résine à base de polycarbonate selon la revendication 11, dans laquelle :
R₁₃ est un méthyle.

13. Composition de résine à base de polycarbonate selon la revendication 1, dans laquelle :
l'unité de répétition représentée par la Formule chimique 4 est représentée par la Formule chimique 4-2 :

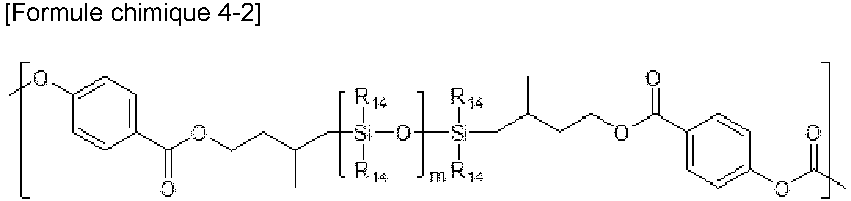

14. Composition de résine à base de polycarbonate selon la revendication 13, dans laquelle :
R₁₄ est un méthyle.
